# EUROPEAN PATENT APPLICATION

(11) **EP 1 081 571 A2**
(43) Date of publication of application: **07.03.2001**
(21) Application number: 00610087.9
(22) Date of filing: 01.09.2000
(51) Int. Cl.: G05D 16/06

(54) **Differential pressure regulator**

(30) Priority: 02.09.1999 DK 31499
(71) Applicant: Ingeniorfirmaet Redan A/S, 8240 Risskov (DE)
(72) Inventor: Faurschou, Jens, 8240 Risskov (DK); Houlberg, Sven, 8240 Risskov (DK); Nielsen, Kent, 8240 Risskov (DK)
(74) Representative: Larsen, Hans Ole

(57) **Abstract**

A differential pressure regulator comprising an integral diaphragm actuator (8) and a valve (1), the valve cone (5) and the spindle (6) thereof being provided according to the invention with a through-going channel (7) connecting one side (13) of the diaphragm (9) with the inlet medium (2) of the valve (1). The result is a compact and reliable capillary connection between the inlet medium (2) and the diaphragm chamber (13).

This also obviates the need for an externally extending capillary tube which has in this manner been replaced by an internally extending capillary channel (7).

## Description

### State of the art

The invention relates to a differential pressure regulator comprising partly a diaphragm actuator which on one side thereof is pressurized by a liquid medium, the inlet medium, and on its other side thereof is pressurised by a medium, the utility medium, diverted from the inlet medium, and partly a valve with an inlet for the diverted medium and an outlet for the regulated medium, said valve comprising a valve seat and a co-operating valve cone arranged on a spindle being connected to the diaphragm.

Regulators of this kind are preferably used in systems where there is a need for a constant pressure.

Such systems may for example be district heating systems, where due to the variable inlet pressure and consumption there is a need for a stabilisation of the utility pressure in order that thermostats and valves may operate properly.

But generally, regulators of this kind may be used for regulating any type of liquid and gas, whether as a differential pressure, constant pressure, volume and pressure hold regulator.

Previously known regulators of this kind are made in a quite traditional manner by building together existing components. The result is large and heavy units having externally extending piping which make it difficult to install and maintain the structures.

An example of such a differential pressure regulator is described in the guide "Differenzdruckregler mit Durchflussbegrenzung" issued in January 1988 by Samson AG.

This differential pressure regulator comprises a valve body in the form of a cone which has a controlled slide about a fixed guide and which is connected to the diaphragm via a stay against a spring-load. Through this valve body extends a bore which opens itself under the valve body and the guide.

Through this bore the valve body is acted on for achieving a pressure relief of the valve, and at the same time the pressure is directed via the bore to the negative side of the diaphragm housing.

The positive side of the diaphragm housing is connected in a traditional manner to the district heating inlet via a capillary tube.

### Object of the invention

It is the object of the invention to simplify the structure for partly making it more compact but just as much for ensuring the highest possible reliability, stability and regulating accuracy.

Additional advantages are easy mounting and a reduced need for space due to the compact structure.

This is achieved according to the invention by a regulator the valve thereof comprising a valve seat and a co-operating valve cone arranged on a spindle which is connected to the diaphragm, and where the spindle is provided with a through-going channel connecting the other side of the diaphragm with the diverted medium.

This will provide for a compact structure since the diaphragm housing and the valve may more or less extend into an integral compact unit, and since the capillary connection is internal, the externally extending capillary tube is avoided.

At the same time, the design will cause the regulation of the valve to take place directly on the valve unit rendering an accurate effect.

Finally, the risk of leak damages is insignificant since all media flow apart.

By designing the channel in the spindle, as disclosed in claim 2, as an axially extending bore ending in a radially extending bore, the channel is easily manufactured and it will always function since leaks cannot occur.

By dimensioning it in such a manner that the channel functions as a capillary connection, as disclosed in claim 3, the regulation will take place in a steady manner.

By mounting an additional valve on the regulator, as disclosed in claim 4, the volume of the regulated medium may be restricted. This is applied where settling of accounts takes place on the basis of the maximum volume of required district heating water.

By mounting the valve body in such a manner that the regulator blocks the flow at standstill, as disclosed in claim 5, the regulator may be utilised for pressure hold regulation.

### The drawing

Embodiments of the regulator according to the invention will be described in more detail in the following with reference to the drawing, wherein
- fig. 1: is a part section of an example of a differential pressure regulator according to the invention,
- fig. 2: is a part section of a combined differential pressure and volume regulator according to the invention, and
- fig. 3: is an embodiment from a regulator having another valve placement for forming a pressure hold regulator.

### Description of two embodiments

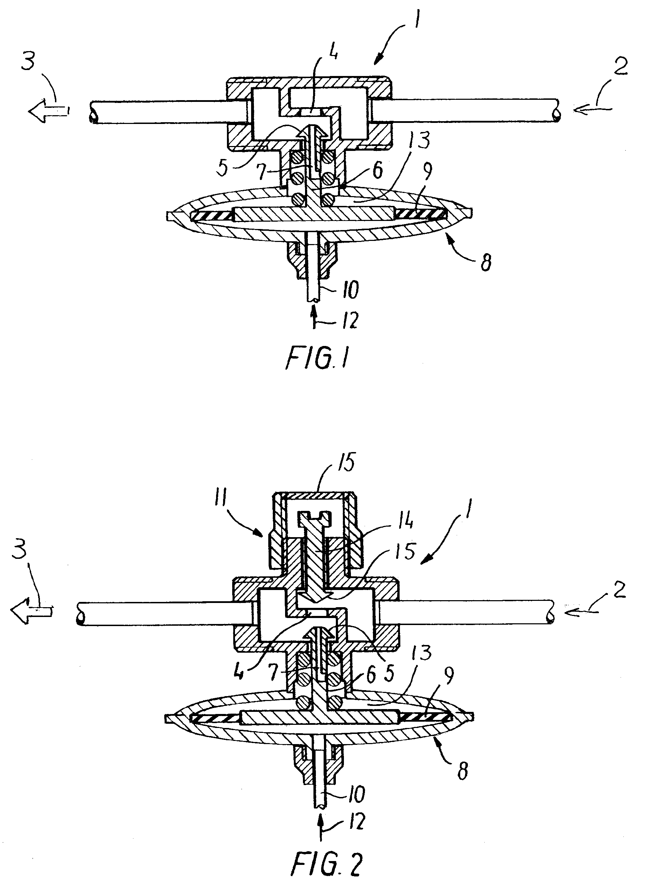

Fig. 1 shows an example of a differential pressure regulator according to the invention.

The regulator comprises a diaphragm part 8 having a closed housing wherein a diaphragm 9 is mounted.

As will appear from the drawing, the diaphragm housing 8 is shaped internally in such a manner that any excess pressure within the chamber will move the diaphragm 9 for engagement with the interior of the housing without damage to the diaphragm.

Damage to the diaphragm is often experienced in connection with commonly designed housings wherein the diaphragm is liable to being blown to pieces due to the relatively great distance to the interior of the housing.

To one side of the diaphragm 9, the lower side of the drawing, there is admission of the medium 12, which is the reference pressure, i.e. typically the inlet pressure in connection with a district heating system.

This pressure is supplied to the diaphragm chamber through a capillary tube 10.

In the opposite chamber 13, a spindle 6 is mounted to the diaphragm 9, said spindle 6 being provided with a valve body at its upper end and which in the shown example has the shape of a cone.

The spindle 6 is fixed by means of a compression spring, as shown in the drawing.

In the spindle 6 there is an axially extending channel 7 which extends from the top of the valve body 5 and which opens into the upper chamber 13 of the diaphragm chamber 8 through a radial bore.

The spindle 6 extends through the valve housing 1 into the valve chamber where the valve body 5 may cooperate with a valve seat 4 in that a differential excess pressure within the diaphragm housing 8 will move the valve body to reduce the outlet pressure 3, whereas a differential low pressure will increase the outlet pressure 3 through the valve 1 and thereby regulate the diverted medium 2 flowing through the valve 1. The regulated resultant medium 3 will then always have a constant pressure.

Where there is also a desire for a volume regulation over and above the mentioned pressure regulation, the regulator may be designed as shown in the example in fig. 2.

On the valve 1 an extension in the form of a throttle valve 11 has been made.

This throttle valve 11 is mounted on the opposite side of the valve seat 4 where the pressure is constant and is designed as an adjustable valve body 15 arranged at a distance from the seat and which is adjustable by means of a threaded spindle 14 within the housing. The throttle valve body 15 is accordingly adjustable from the outside in that the spindle outside the housing is provided with edges, a slot or the like.

The valve will then operate as a throttle valve and the volume of medium to pass through the regulator will be adjustable under a constant pressure. Consequently, it will be possible by means of the regulator to establish a constant flow while at the same time maintaining a constant pressure irrespective of the load.

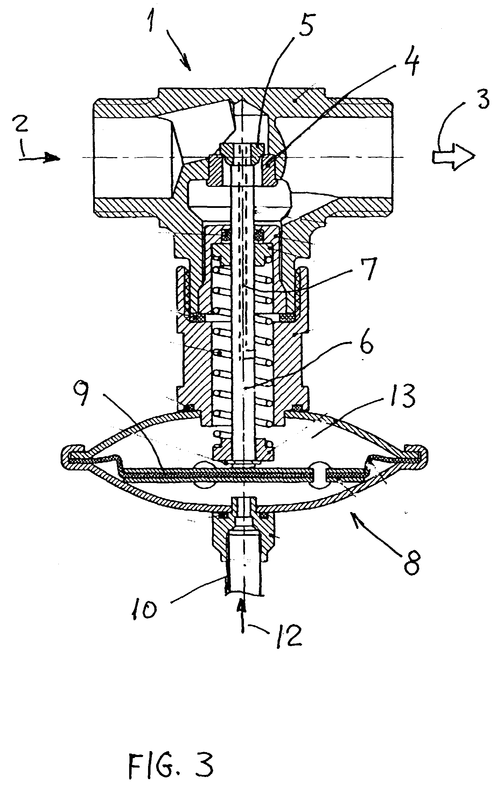

Fig. 3 shows an example of an amended valve structure wherein the valve body has been turned in the valve in such a manner that the valve 4, 5 will shut off the flow in the valve at standstill, as shown in fig. 3.

When the pressure in the return pipe 12 exceeds a preset value, the regulator will admit flow and keep the pressure at the set value. This is called a pressure hold regulation.

This regulator is for example utilised where there is access to hot springs in the subsoil and these springs are available for use as a district heating medium in that the hot water may be led direct into e.g. radiator circuits and from there be discharged into the nature.

By means of the pressure hold regulator shown in fig. 3, a material advantage is obtained, namely that there will always be water in the system irrespective of the temperature level of the system.

In case a pressure hold regulator was not used, the water would flow straight out of the system when the radiator thermostats close, which would entail noise nuisances as well as a risk of a destructive corrosion in the system.

All the embodiments according to the invention are very compact and without any externally extending piping. The integral structure furthermore assists in ensuring an accurate operation since there are only linear directions of motion extending in the axial direction of the components.

The result is an accurate and very reliable regulator.

## Claims

1. Differential pressure regulator comprising partly a diaphragm actuator which on one side thereof is pressurized by a liquid medium, the inlet medium, and on its other side thereof is pressurised by a medium, the utility medium, diverted from the inlet medium, and partly a valve with an inlet for the diverted medium and an outlet for the regulated medium, said valve comprising a valve seat and a co-operating valve cone arranged on a spindle being connected to the diaphragm, **characterised in** that the spindle (6) is provided with a through-going channel (7) connecting the other side (13) of the diaphragm (9) with the diverted medium (2).

2. Regulator according to claim 1, **charaterised in** that the channel (7) extends through the valve cone (5) and a distance into the spindle (6) and from there out through a radial bore.

3. Regulator according to claims 1 and 2, **charaterised in** that the channel (7) is a capillary channel.

4. Regulator according to any one of the preceding claims, **charaterised in** that on the inlet side of the valve (1) of the regulating medium (3) there is provided an additional valve (11) comprising an adjustable throttle valve (4, 13) for regulating the volume of the regulated medium (3) (fig. 2).

5. Regulator according to claims 1-3, **charaterised in** that the valve cone (5) extends on the inlet side of the valve seat (4) in such a manner that the valve (1) is closed to a flow at standstill (fig. 3).
